# EUROPEAN PATENT APPLICATION

(11) **EP 1 045 587 A1**
(43) Date of publication of application: **18.10.2000**
(21) Application number: 00400598.9
(22) Date of filing: 06.03.2000
(51) Int. Cl.: H04N 7/173

(54) **Method and system for developing and controlling live interactive multimedia applications**

(30) Priority: 19.03.1999 FR 9903462
(71) Applicant: THOMSON multimedia, 92100 Boulogne Billancourt (FR)
(72) Inventor: Chevallier, Louis, 92648 Boulogne Cedex (FR); Dehoux, Olivier, 92648 Boulogne Cedex (FR); Houeix, Pierre, 92648 Boulogne Cedex (FR)
(74) Representative: Kohrs, Martin

(57) **Abstract**

Within an image chain, it is not easy to intervene either to develop or to control live interactive applications. Consequently, the object of the invention is to adapt this image chain to an entirely interactive environment so as to implement a method and a device for developing and controlling live interactive applications. In this way, the events provider (159) is able to produce a live interactive application as if the former were connected directly to the television viewer's terminal.

A fundamental aspect of an interactive application produced by the invention is its capacity to evolve over time. Consequently, the device for developing and controlling interactive multimedia applications must have available a means (140) of configuring the elements of interactive applications and a means (150) of live control of interactive applications so as to interact directly in all interactive applications broadcast to the television viewers.

## Description

The present invention relates to the processing and transmission of information in an interactive multimedia system and more particularly to a method and a system for developing and controlling live interactive multimedia applications.

The processing and transmission of information in an interactive multimedia system require at least one transmitter and a plurality of interactive multimedia devices linked to the transmitter by a network of interactive connections.

The interest which consumers are taking in this technical domain is growing. Patent Application No. PCT/99/06992 filed by the applicant in EUROPE describes a method for receiving interactive multimedia applications which the user can select. Producers of interactive applications come up against the unavailability of powerful tools for developing these applications. It is consequently difficult to produce interactive applications of sufficient quality to satisfy the consumers and to make interactive television into a success. Furthermore, existing tools do not permit editing and control of the broadcasting of events and applications live.

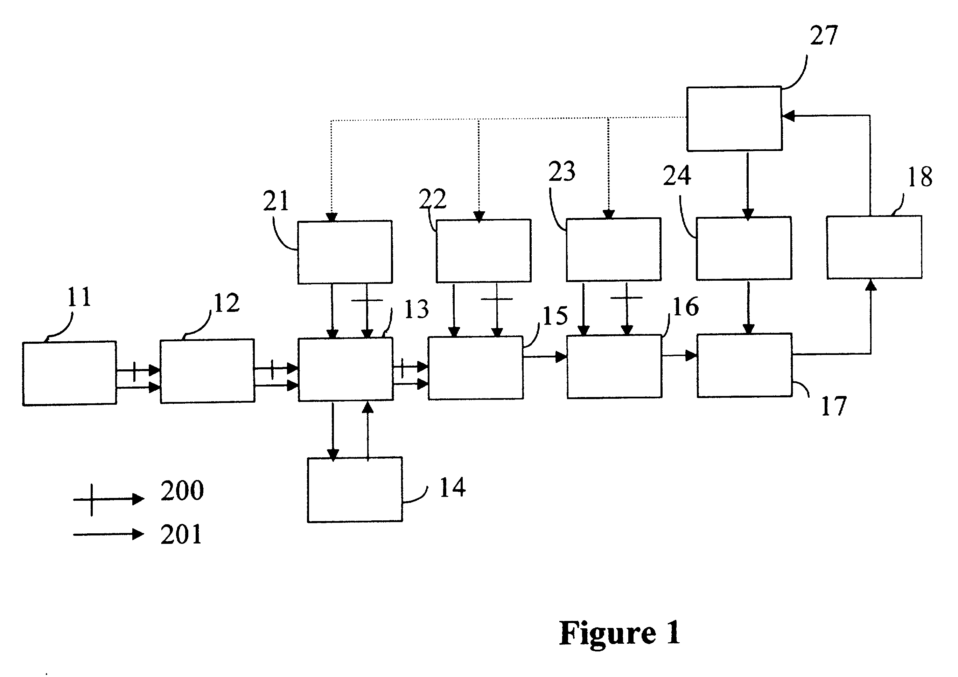

Figure 1 positions the various actors in the production chain from the source, that is to say a studio or a field of action, to the screen of the television viewer. The arrows of "on-line" type (201) indicate the involvement of data transmitted during the broadcasting of the event. The "off-line" arrow (200) indicates that transmission took place off-line before the broadcasting of the event.

Six components are therefore used and have various roles:
. The **content proprietor** (11): he has a purely economic role and is not responsible for delivering content to the consumers. These are for example sports federations who receive money for filming rights or proprietors of images, etc,
. The **content provider** (12, 21, 22, 23, 24): he acquires information and formats it possibly according to the requirements of the events provider,
. The **events provider** (13): he is responsible for transmitting the various contents and for mixing them so as to provide the final product to the services provider. For example, for a football match, he produces slow motion action sequences, mixes with other sequences, or special effects,
. The **services provider** (15): he is in charge of programming the events so as to deliver an uninterrupted string of events to the package provider,
. The **package provider** (16): he broadcasts several services,
. The **network managers** (14, 17, 27): they are responsible for transmitting information between the various devices, and employ physical media such as cable, satellite, etc,
. The **consumers** or television viewers (18).

In this representation of the image chain in the prior art, it is not easy to intervene either to develop or to control live interactive applications. Consequently, the present invention modifies this environment so as to adapt it to an entirely interactive environment in such a way as to implement a method and a system for developing and controlling live interactive applications.

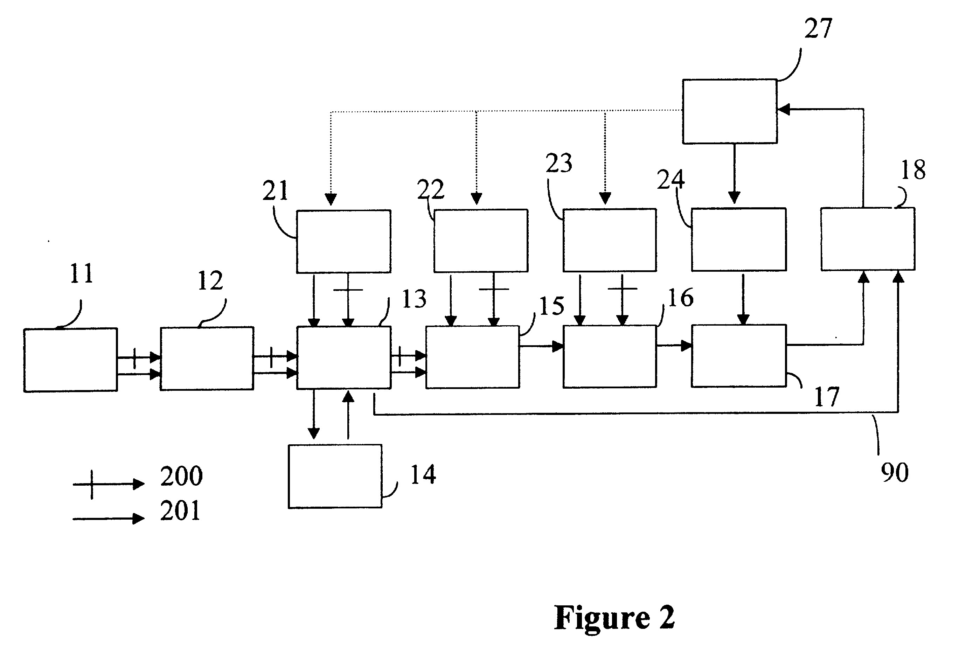

According to the present invention, the events provider (13) is able to produce a live interactive application as if the former were connected directly to the user's terminal, as represented by the line (90) of Figure 2. In this way, the interactive application provides the consumers with multimedia data which may evolve dynamically. Moreover, this application offers them the means of being alerted to their availability and of navigating between them.

A fundamental aspect of an interactive application produced by the invention is its capacity to evolve over time. For example, for a motor race, several video production channels may be allotted (on-board camera, conventional reporting, interviews, etc). When an accident occurs, the producer can decide to program new video sequences (camera stationary on the accident, slow motion over the accident, lookbacks at other accidents).

At the same time, the producer drops other sequences so as to keep the same passband. Like the audiovisual content, the interactive application must evolve (menu for selecting video sequences, information relating to the accident, etc).

By using an appropriate navigation engine for operating interactive applications in decoders, the system according to the present invention can create and arrange application elements dynamically. These application elements make it possible to depict video sequences and/or to contain graphical or textual information. The events provider is able, on the one hand, to prepare application elements in the *configuration* phase, and on the other hand, to modify the interactive application (creation, connection, removal, modification) of the application elements in the *control* phase during broadcasting (live).

Configuration allows the preparation of application elements and of metaphor elements which may be necessary during live transmissions. This preparation is necessary for obtaining a quality application and for high reactivity of the events provider during live broadcasting.

Control allows the events provider to construct the interactive application live from the material emanating from the configuration, from information from the field of action or outside information and from decisions taken by the audiovisual production. Control can be performed by virtue of the five components:
- a device for managing the play-lists (part of the audiovisual production responsible for ordering the audio-video sequences), which is the interface with a play-lists generating device,
- a programming device responsible for the formatting and the feedback (carousel) of the data to be transmitted to an insertion device (part of the audiovisual production responsible for multiplexing the data with the audio-video streams),
- an IAD management device, the IAD being the collection of application elements and of metaphor elements (Interactive Application Description),
- a device for generating data which receives contextual data for the data generation application (equipment on the field of action),
- a man/machine interface which affords the events provider a graphical interface for live management and configuration of the production of the interactive application.

The invention will be better understood with the aid of an embodiment illustrated by the hereinbelow, taken by way of non-limiting example.

Figure 1 represents the various roles of the image production chain.

Figure 2 represents an environment of the image production chain according to the present invention.

Figure 3 illustrates the architecture and the various components of the system of the present invention.

Figure 4 illustrates the functional architecture of the system of the present invention.

The interactive application affords users multimedia data and means for navigating around these data. A fundamental aspect of the interactive application handled by the invention is its capacity to evolve over time not only in respect of video and audio but also in respect of other types of data and even in respect of the navigation means.

At a given instant, the navigation engine, stowed on board a decoder and supporting the interactive application, manages a collection of data (LNG) which describe the structure of the application (application elements) and of the presentation data (metaphor elements). With the aid of the navigation engine, the user can ascertain the available list of application elements and thus make his selection. The latter is performed for example by clicking on an icon or by pressing a button of the decoder when the application element is highlighted on the screen. The user can also call up a selection menu for example of the "Electronic Program Guide" type. The LNG comprises the part of the application elements which are necessary at this instant for dialogue with the viewer. This LNG is constructed by the navigation engine from the application elements broadcast by the events provider (IAD). The IAD represents at a given instant the state of the application as a whole. A description of the evolution of the IAD over time is edited live by the events provider. In an ongoing manner, the IAD management module of the invention transforms the IAD broadcast on the basis of the edited data.

Before an event is broadcast live, the producer is presumed to have prepared the interactive application both in respect of the video and the audio. A configuration tool offers the events provider the ability to construct application elements which may be inserted, removed or modified dynamically so as to describe the temporal evolution of the IAD. The configuration tool also makes it possible to define operations (macros) which can be run during the broadcast, so as to improve the reactivity of the events provider.

In the particular application of a motor race, the IAD is composed of a main element (an input menu) and of additional elements, each of them affording the consumers access to a different video component.

Thus, in this case, the configuration tool generates an IAD and a series of operations on the IAD elements which are ready to be used such as: addition, modification or removal of video sequences.

Within the framework of the processing of input and output signals, the method and the system of the present invention perform three types of operations:
- at broadcasting level, they cause the IAD to evolve temporally and they generate messages in such a way as to construct the broadcast IAD, taking account of the broadcasting constraints such as the width of the passband. The passband used can be modulated as a function of the parameters such as the quality of the video or the desired data access time,
- at the data generator level, they provide information about the field of action or outside information of graphical or textual type (speed of a vehicle depicted by an application element, ranking of motor cars, lap record, etc),
- at the level of the process for generating the video and audio streams, they are responsible for ordering the video and audio contents. This process must allow proper synchronization with the IAD. For example, when the IAD describes the availability of a new application element at a given time, this time must correspond to the transmission of the corresponding video component,
- at the decoder level, they monitor the broadcasting of the video and audio streams and detect the appearance and disappearance of application elements. They update the memory of the decoder, and possibly the display if the latter offers the user the list of available application elements.

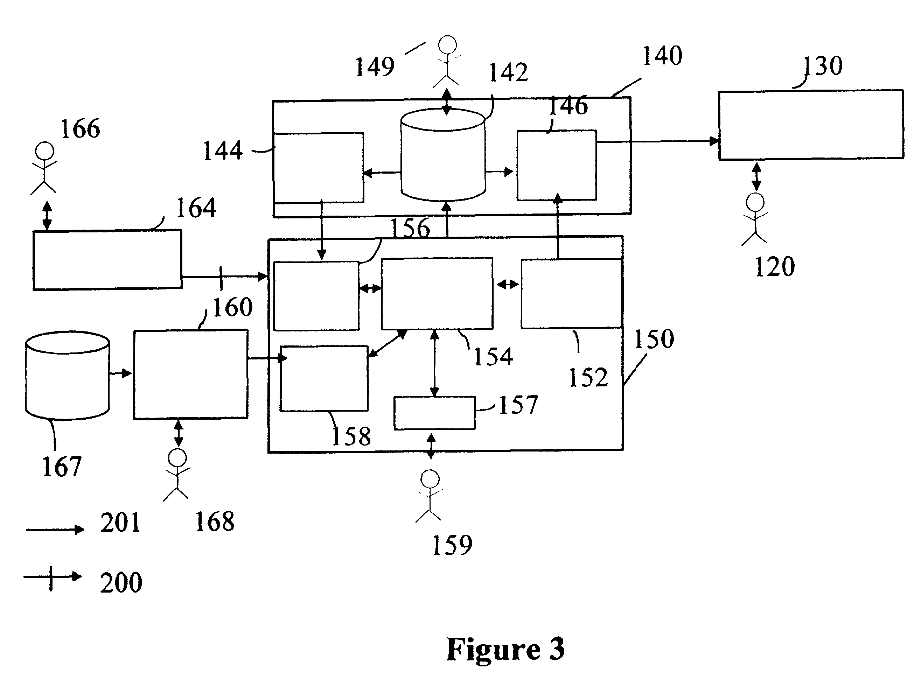

As shown in Figure 3, the audio and video production device (140) interfacing an events provider or content provider (149) comprises two components: an audiovisual production generation device (144) or commonly called "play-lists" (part of the audiovisual production responsible for ordering the audio-video sequences) and an insertion device (146) (part of the audiovisual production responsible for multiplexing the data with the audio-video streams). A database (142) which stores video sequences is accessible to a control device (150).

A configurator (164) is used as a graphical interface in relation to the event or content provider (166). This is in fact a graphics tool which makes it possible to construct interactive programs. The producer can therefore prepare his interactive program by using a predefined application template. This tool provides the producer with blocks of interactive applications. Once the interactive application has been constructed, the producer can test it. It is then transmitted to the decoder (130) for execution by the navigation engine.

Moreover, the control device (150) is implemented in such a way as to provide a graphics tool. This graphics tool makes it possible to broadcast interactive programs constructed by the configurator (164) so that the producer can dynamically add or modify application elements so as to supplement his initial application. The "preview" mode is provided for this purpose since it enables all the modifications to be made on the local decoder. The control device (150) comprises five components:
- a play-lists management device (156) which is the interface with the play-lists generating device (144),
- a programming device (152) responsible for the formatting and the feedback (carousel) of the data to be transmitted to the insertion device (146) (part of the audiovisual production responsible for multiplexing the data with the audio-video streams),
- an IAD management device (154) which constructs the application according to the chosen navigation engine,
- a data generation device (158) which receives contextual data for the data generation application (equipment on the field of action), and
- a man/machine interface (157) affording the events provider (159) a graphical interface for managing and configuring, live, the production of the interactive application.

The data generation device (160) receives data from the content provider (168) and organizes them as a "database" (167) so as to make them accessible to the data generation device (160). These data represent for example the score, team line-up, location of the cars, etc. in the case of a motor car race.

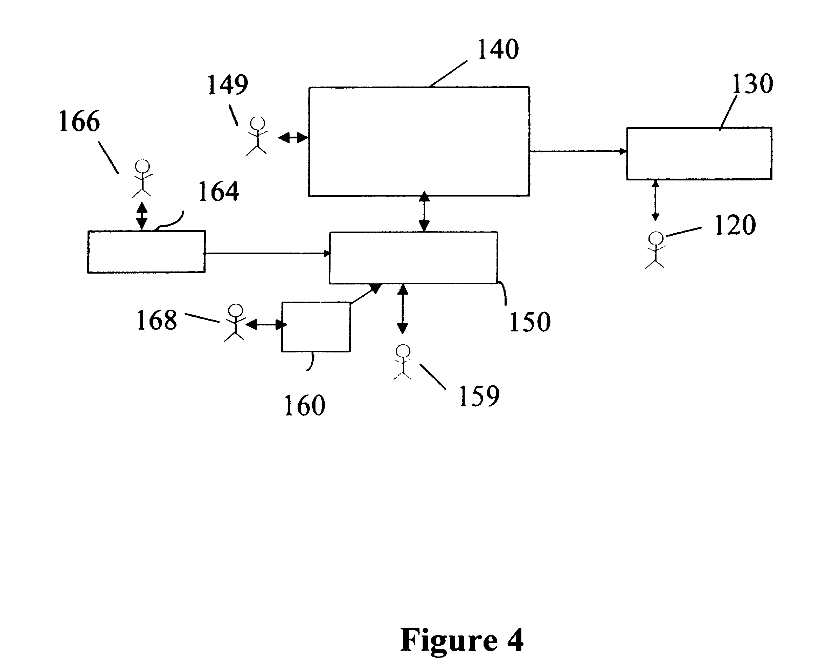

Figure 4 shows the functional architecture of the present invention which incorporates the navigation engine (NE), installed in a decoder (130) for an interactive television system. In the subsequent description, the navigation engine is equated with the decoder (130).

According to the present invention, the decoder loads and executes the interactive applications which are received according to a specific format commonly called IAD (Interactive Application Description). By being linked to a television set (not represented), the decoder (130) communicates with the user (120) through a remote control. During execution, the decoder detects the appearance and the disappearance of application elements. If an application element is no longer broadcast, the decoder erases the corresponding part of the IAD from the memory. If a new application element is being broadcast, it is downloaded, stored in the memory and integrated into the list of available application elements.

The IAD data are transmitted to the decoder (130) according to a certain protocol. A navigation engine performs the following operations:
- loads the useful part of the application and creates the necessary structures (LNG);
- activates and notifies the links in such a way as to manage the navigation in the IAD; and
- passes on the IAD modifications broadcast in the LNG.

According to the present invention, the events provider must be able to access the following functions:
**1/ Depiction of the evolution of the IAD:**
   The application elements are recursive objects (they are either made up of application elements, or made up of elementary objects (nodes or links)). The existence of an application element is defined either by a time of creation and of removal, or by a synchronization with the audio-visual production (play-list). The recursive structure of the application can thus be represented on a time axis. A safety interval is defined so as to avoid late modifications which could impair the integrity of the application (for example, the evolution of the application within a moment is not modifiable). To further ensure the integrity of the application, the events provider has available a preview mode. In this mode, he can make modifications which are not broadcast but can be tested locally at the events provider (with moving time window). The modifications are then applicable in broadcast mode.
**2/ Depiction of operations and of application elements prepared:**
   On completing the configuration phase a collection of operations and of application elements is ready to be used to modify the IAD according to the events of the live broadcast. The mode of access to these operations and to the application elements must be effective so as to optimize the reactivity of the events provider.
**3/ The external means of control may be classified into three categories:**
   . The audio-video production which enables the producer to program the video sequences as explained in the motor car race. The links between the application elements and the video sequences are performed in preview mode and depicted on the application elements.
   . The data generator contributes to the evolution of the IAD by modifying the internal values of the IAD elements. For example, the location and the parameters of the race are periodically updated in the example of the motor car race.
   . The transmission process makes it possible to translate the IAD into messages to be transmitted to all the decoders. Several parameters may be modulated so as to find a compromise between the limitation of the passband and the requirements of the interactive application. The producer must manage the passband allotted between the video, the audio and the data.
**4/ The general functions which are useful to the events provider in respect of the present invention are for example:**
   . Access to the browser, so as to access the objects (metaphor element, prepared data), etc,
   . Access to the broadcasting and control process (passband, etc),
   . Access to the data generator (state of the data generation applications, etc),
   . Access to the depiction of the evolution of the IAD (preview, broadcast),
   . Access to the depiction of the play-list (audio-visual production), etc.

## Claims

1. Transmitter device for multimedia video applications comprising an event provider (159) and a content provider (149, 166, 168); characterized in that the content provider has available a means (140) of configuring the elements of interactive applications; and has available a means (150) of controlling the interactive applications in such a way as to interact directly in all interactive applications broadcast to the television viewers.

2. Transmitter device for multimedia applications according to Claim 1, characterized in that the configuring means (140) comprises a device for generating audiovisual productions (144), and an insertion device (146) allowing the multiplexing of the streams of various kinds.

3. Transmitter device for multimedia applications according to Claim 2, characterized in that the control means (150) comprises:
- a device for managing the audiovisual productions (156) interfacing with the device for generating audiovisual productions (144);
- a programming device (152) responsible for the formatting and for the feedback of the data to be transmitted to the insertion device (146);
- a device for managing the elements of interactive application (154) constructing an interactive application;
- a device for generating data (158) and
- a man/machine interface (157) affording the event provider (159) a graphical interface for managing and configuring, live, the production of the interactive application.

4. Transmitter device for multimedia applications according to Claim 3, characterized in that it comprises a second device for generating data (160) receiving data from the content provider (168), organizing them as a database (167) and providing data to the device for generating data (158) of the control means (150).

5. Transmitter device for multimedia applications according to any one of the preceding claims, in which the elements of interactive application are recursive objects whose existence is defined either by a time of creation or of removal, or by a synchronization with an audiovisual production.

6. Method of developing and controlling interactive multimedia applications in an image production chain extending from the field of action to the television viewers (120) and linking the latter to the event provider (159) and to the content provider (149, 166, 168); method comprising the following steps:
(a) preparing a plurality of interactive applications employing the video and audio channels;
(b) configuring the elements of interactive application so that they can be used dynamically; and
(c) synchronizing the modifications of the interactive applications related to the insertion or to the removal of elements of interactive applications in such a way as to follow the evolution of these interactive applications and to interact with the television viewers.

7. Method according to Claim 6, characterized in that it comprises three types of operations:
(a) at the broadcasting level, following the temporal evolution of the elements of interactive application and generating messages in such a way as to dynamically construct the structure of the broadcast elements of interactive application;
(b) at the data generator level, providing data from the field of action or outside data; and
(c) at the level of the process for generating the video and audio streams, ordering the video and audio contents in such a way as to obtain proper synchronization of the elements of interactive application.

8. Method according to Claim 7, characterized in that a construction of a current graph common to all the decoders is transmitted in such a way as to find a compromise between the limitation in the passband and the requirements of the interactive application.

9. Method according to Claim 8, characterized in that it controls the integrity of the interactive applications by means of the use of a safety interval within the recursive structure of the interactive application.

10. Receiver device for multimedia video applications broadcast from a transmitter, comprising a central unit, a memory intended to receive the said multimedia applications, a means of erasing the said memory, a means of loading said applications into the said memory, a means of user selection of at least one application with the aid of an identifier, characterized in that it furthermore comprises a means of monitoring the transmissions broadcast and a means of detecting the appearances/disappearances of the multimedia applications, the said detecting means triggering the loading means when an application appears, triggering the means of erasing the memory so as to erase an application when this application disappears, operating on the selection means so as to add/remove the identifier for a multimedia application which has appeared/disappeared.
